# EUROPEAN PATENT SPECIFICATION

(11) **EP 0 517 675 B1**
(45) Date of publication and mention of the grant of the patent: **09.08.1995**
(21) Application number: 92830258.7
(22) Date of filing: 26.05.1992
(51) Int. Cl.: F16H 3/72, F02B 39/06, B60K 6/00

(54) **A compound diesel engine with a mechanically-connected turbosupercharger**
Dieselmotor mit einem mechanisch verbundenen Turbolader
Moteur Diesel avec turbocompresseur d'air entraîné mécaniquement

(30) Priority: 06.06.1991 IT TO910432
(43) Date of publication of application: 09.12.1992
(73) Proprietor: IVECO FIAT S.p.A., 10156 Torino (IT)
(72) Inventor: Montali, Marcello, I-10131 Torino (IT)
(74) Representative: Bosotti, Luciano

(56) References cited:
- EP-A- 0 181 418
- EP-A- 0 304 919
- FR-A- 1 169 502
- FR-A- 2 609 499
- GB-A- 886 659
- US-A- 2 197 179
- US-A- 4 995 862

## Description

The present invention relates in general to internal combustion engines used for traction on land. At their current state of technological development, the overall performance of these engines is still unsatisfactory and researchers therefore concentrate their efforts on the high percentages of energy which are lost during the thermodynamic process and which represent about 60% of the total energy balance, of which about 35% is lost in the exhaust and about 25% in the cooling of the engine.

A turbosupercharger may be associated with such an engine, in known manner, in order to improve its overall performance by making use of the energy of the exhaust gases to compress the intake gases.

In this case the poor efficiency of the turbosupercharger is more than acceptable since it makes use of recovered energy which would otherwise be lost.

Under certain operating conditions, typically when the engine is running slowly, however, the energy supplied by the exhaust gases is insufficient to drive the turbosupercharger at fairly high rates of rotation in order to develop a satisfactory supply pressure. In this situation, it would be useful to supply the turbosupercharger with power taken from the shaft of the internal combustion engine in order to increase its rate of rotation, thus increasing the pressure of the supply to the engine and hence the power developed.

When the engine is running at high speeds, however, it would be convenient to recover the power which the turbine can deliver in excess of the needs of the supercharger and which at the moment is lost since it cannot be used.

In order to achieve the best possible performance, it would therefore be advantageous to have a mechanical connection between the internal combustion engine and the turbosupercharger in order to develop one portion of the thermodynamic cycle in the cylinders of the internal combustion engine and another portion of the cycle in the turbosupercharger.

The combination of the two machines would create a compound engine, known as a "turbocompound" engine, in which the turbosupercharger would no longer merely be a member for supercharging the internal combustion engine, but could also send back to the shaft of the internal combustion engine that portion of the energy of the exhaust gases which exceeds the energy requirements of the compressor.

Moreover, when the engine is running slowly, the energy supplied by the exhaust gases is insufficient for the turbosupercharger to operate very efficiently and power could therefore be taken from the shaft of the internal combustion engine to assist the driving of the turbosupercharger.

It is not possible to achieve both the aforesaid advantageous effects and simultaneously to improve the efficiency of the engine at both high and low running speeds with the use of fixed mechanical connections between the engine and the turbosupercharger.

The best solution to this problem consists of the use of a variable-ratio transmission so that the supercharger can operate at the desired speed regardless of the engine speed and the energy available from the exhaust gases.

The present invention relates specifically to a compound engine including a diesel engine and a turbosupercharger the shaft of which is coupled mechanically to the shaft of the engine by a variable-ratio transmission unit, as disclosed in GB-A-886 659

The object of the present invention is to provide a compound diesel engine having a mechanical transmission which interconnects the turbosupercharger and the engine, which has a widely variable, high transmission ratio and which can be piloted electromechanically, the engine being distinguished by very efficient operation under all conditions.

This object is achieved by virtue of the fact that the transmission unit includes a first epicyclic reduction unit including a first ring gear coupled externally for rotation with the shaft of the engine, a first sun gear coaxial with the first ring gear, a first planet-carrier carrying first planets meshed with the internal teeth of the first ring gear and with the first sun gear, and a second epicyclic reduction unit arranged in series with the first and including a second ring gear coupled externally for rotation with the shaft of the turbosupercharger, a second sun gear coaxial with the second ring gear, a second planet-carrier rotated by the first ring gear and carrying second planets meshed with the internal teeth of the second ring gear and with the second sun gear, and in which the first and second sun gears are connected for rotation together,
means for controlling the speed of rotation of the second sun gear,
sensor means for sensing operating conditions of the engine, and
an electronic control unit which is supplied by the sensor means and is arranged to pilot the control means in dependence on the operating conditions of the engine.

By virtue of these characteristics, the compound engine according to the invention achieves high performance at both low and high running speeds, reduces the smoke emitted during acceleration, and also increases the passive energy generated when it is used for engine braking so that small supercharged engines can be installed even in urban buses and touring coaches with advantages in terms of bulk, weight and consumption.

The use of a mechanical transmission constituted by several gears enables even very high torques to be transmitted.

The present engine can also, to advantage, be produced with the use of components already normally available for the production of conventional engines and is thus distinguished by fairly low production costs.

Further characteristics and advantages of the present invention will become clear from the detailed description which follows with reference to the appended drawings, provided purely by way of non-limiting example, in which:
Figure 1 is a partially-sectioned, schematic, perspective view of the variable-ratio transmission unit which forms part of the engine according to the present invention,
Figure 2 is a partially-sectioned side elevational view of the transmission unit of Figure 1,
Figure 3 is a diagram of the compound engine according to the invention showing sensors associated therewith and an electronic control unit,
Figures 4, 5, 6 and 7 are simplified diagrams showing schematically the operation of the variable-ratio transmission unit in different operating conditions, and
Figure 8 is a diagram relating the speeds of rotation of members of the variable-ratio transmission unit.

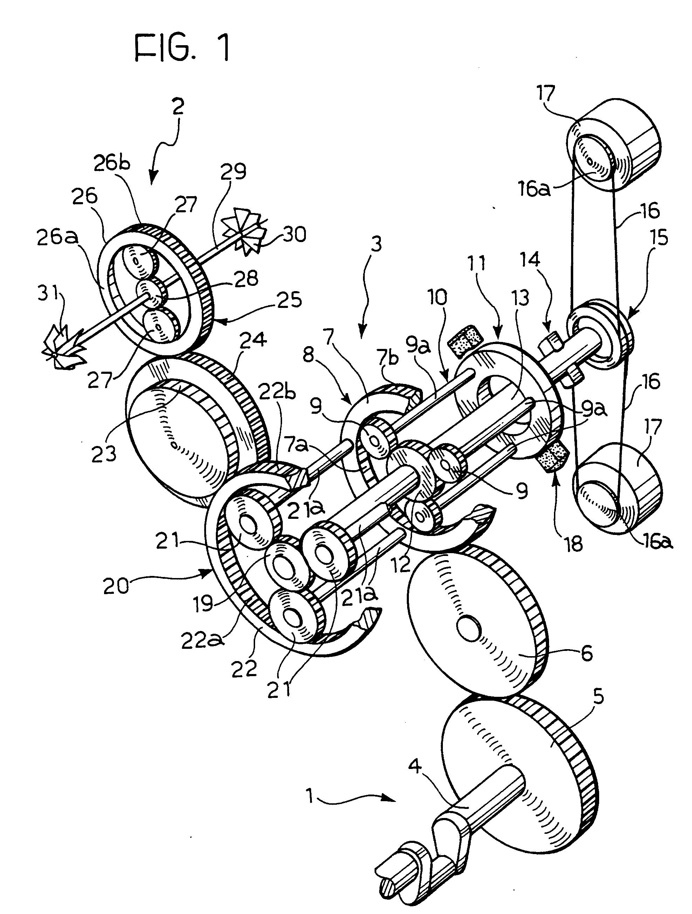

With reference first of all to Figures 1, 2 and 3, the compound engine according to the invention includes a diesel engine 1 and a turbosupercharger 2, between which is a variable-ratio transmission unit 3.

The engine 1 includes, in known manner, a crankshaft 4 which rotates an output gear 5, disposed, for example, near the flywheel 4a.

The gear 5 meshes with an intermediate gear 6 meshing with a ring gear 7 which has both internal and external teeth 7a and 7b and forms part of a first epicyclic reduction unit 8 of the transmission unit 3. Planets 9 which rotate within the ring gear 7 and mesh with the teeth 7a are supported rotatably on respective pins 9a which, together with a cylindrical element 11 coaxial with the ring gear 7, constitute a common planet-carrier 10.

A sun gear 12 coaxial with the ring gear 7 and meshing with the planets 9 is carried by a shaft 13 and fixed for rotation therewith.

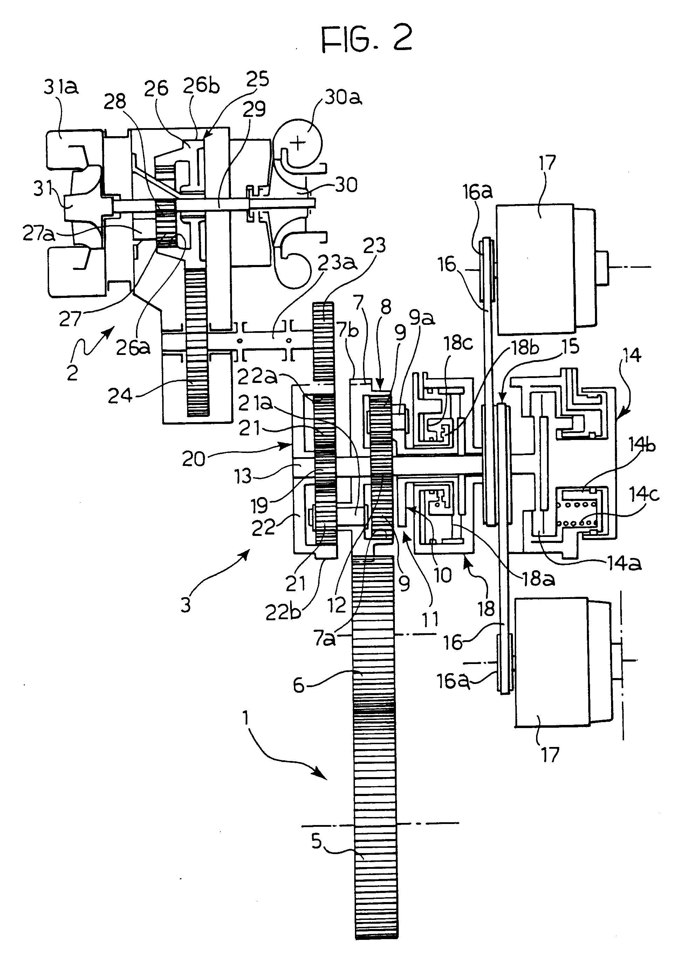

A braking unit 14 associated with the shaft 13 can exert a braking action, by means of a slidable piston 14b which is operated electropneumatically against the action of opposing helical springs 14c (Figure 2), on a disc 14a fixed rigidly to the shaft 13.

Two endless trapezoidal belts 16 pass around a double pulley 15 keyed to the shaft 13 and are associated with respective pulleys 16a keyed to respective shafts of two alternators 17, the functions of which will be explained further below.

There is a second braking unit 18 for braking a disc 18a formed integrally with the cylindrical element 11 by the operation of an electropneumatically driven piston 18b against the action of an opposing helical spring 18c.

Both the brakes 14 and 18 are of the "on-off" type.

A second sun gear 19 keyed to the shaft 13 on the opposite side of the sun gear 12 from the pulley 15 forms part of a second epicyclic reduction unit 20 which acts as a divider and is arranged in series with the first epicyclic reduction unit 8. The sun gear 19 meshes with planets 21 rotatable on pins 21a which, together with the ring gear 7, constitute the planet-carrier of the dividing reduction unit 20. The planets 21 are meshed with the internal teeth 22a of a ring gear 22 coaxial with the sun gear 19, the external teeth 22b of which are coupled for rotation with a gear 23. The gear 23 is fixed for rotation with a gear 24 by means of a connecting shaft 23a and the gear 24 is connected to an epicyclic reduction unit 25 of the turbosupercharger 2. The reduction unit 25 includes a ring gear 26 with two sets of teeth of which the external set 26b is meshed with the gear 24, and planets 27 which mesh with the internal teeth 26a of the ring gear 26 and with a sun gear 28 interposed between them. The sun gear 28 is carried by a shaft 29 which is coaxial with the ring gear and, in known manner, has a compressor rotor 30 keyed to one of its ends and a turbine wheel 31, which is rotated by the exhaust gases from the engine 1, keyed to its other end. The bodies of the compressor and of the turbine are indicated 30a and 31a (Figure 2).

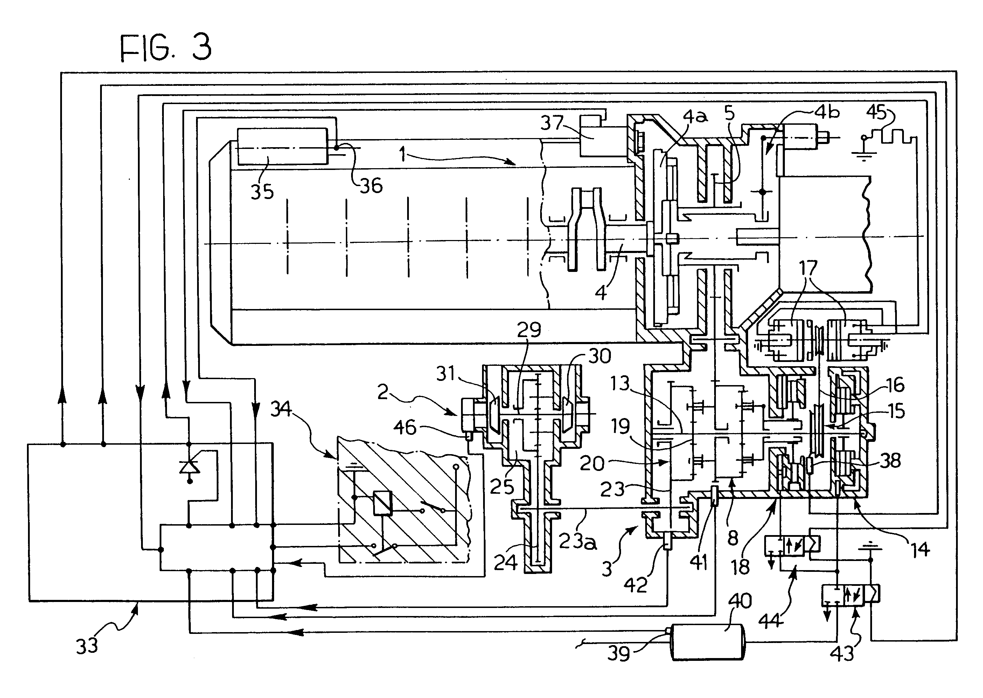

Figure 3 shows schematically sensor members which transmit signals indicative of the operating conditions of the engine to an electronic control unit 33 which, in response, pilots the operation of the brakes 14 and 18 and the speeds of rotation of the alternators 17 so as to vary the transmission ratio of the unit 3 between the turbosupercharger 2 and the engine 1. The electronic control unit 33 is activated by the operation of the engine starter 34.

The electronic control unit 33 receives signals emitted by the following sensors: a fuel-supply sensor 36 associated with the injection pump 35 of the engine, a sensor 37 for detecting the operation of the starter motor, a sensor 38 for sensing the speed of rotation of the shaft 13 which is common to the epicyclic reduction units 8 and 20, a pressure sensor 39 associated with an accumulator 40 for compressed air for operating the brakes 14 and 18, a sensor 41 associated with the ring gear 7 of the epicyclic reduction unit 8 for sensing the speed of rotation of the internal combustion engine 1, a sensor 42 associated with the gear 23, for sensing the speed of rotation of the turbosupercharger 2, and an engine-braking sensor 46.

The electronic control unit 33 organises and processes the input signals received from the sensors and, in response, supplies pulses for selectively operating solenoid valves 43 and 44 which control the operation of the brakes 14 and 18 respectively by connecting them to the compressed-fluid accumulator 40.

The electronic control unit 33 also determines the speed at which alternators 17 rotate to drive the shaft 13.

A resistor 45, which acts as a dissipator, is connected to the alternators 17.

In operation, according to the operating conditions of the engine and the driver's commands expressed by the accelerator pedal, a predetermined speed of rotation is set for the shaft 13 by the modulation of the desired braking torque to prevent its natural tendency to accelerate, either by the selective operation of the brakes 14 or 18 or by the variation of the speed of rotation of the alternators 17. The entire system enables the amount of power transferred between the engine and the turbosupercharger to be controlled by varying the rate of rotation of the shaft 13 and hence of the sun gears 12 and 19.

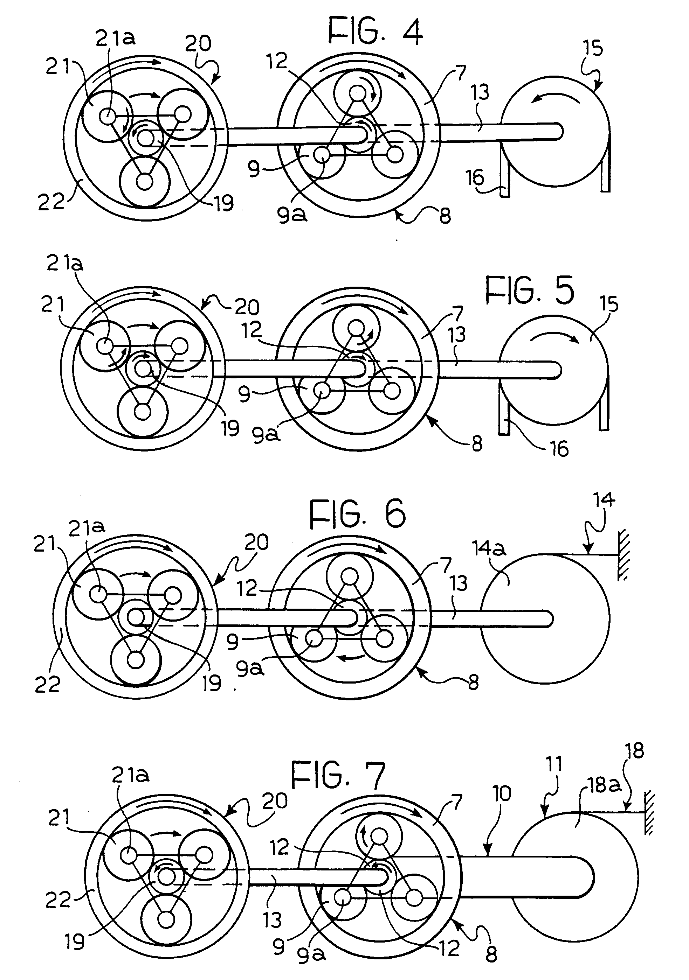

When the engine is running slowly or accelerating, a particular operating condition arises which, in conventional diesel engines, is considered critical both because of the difficulty with which fast rates of rotation can be achieved quickly and because of the quantity of fumes emitted in the exhaust. In this condition, which is known as the "no lag" condition, the sensors 42 and 36 in the engine of the present invention indicate a slow rate of rotation of the turbosupercharger and a rapid increase in the fuel supply, respectively. In these circumstances, the electronic control unit 33 sets the system for maximum transmission between the engine 1 and the turbosupercharger 2 so that the turbosupercharger can be driven by the engine. In order to achieve the maximum transmission ratio between the engine 1 and the turbosupercharger 2, the shaft 13 is made to contrarotate relative to the ring gear 22 and the planet-carrier 21 constituted by the ring gear 7. In order to achieve this operating condition, the brake 18 is operated, thus locking the planet-carrier of the epicyclic reduction unit 8 (Figure 7) and the rate of rotation of the shaft 13 may also be modulated by adjusting the speed of rotation of the alternators 17. In some circumstances it may be unnecessary to make the shaft 13 contrarotate relative to the ring gear 22 and, in applications in which is important to reduce the "lag" without cancelling it out, it may suffice to lock the shaft 13 by operating the brake 14 (Figure 6) and hence to stop the sun gear 19. For this purpose, if a lower level of performance with a simpler structure is acceptable, the brake 18 may be omitted.

Whether or not there is a brake 18, as long as the engine continues to accelerate, the speed of the turbosupercharger 2 will automatically be adjusted to suit the speed of rotation of the engine 1. When the turbosupercharger 2 needs less power to be transferred from the engine 1, the transmission ratio of the unit 3 is adjusted by altering the speed of rotation of the shaft 13 by means of the alternators 17 (Figure 5) until the optimum operating conditions of the turbosupercharger 2 are achieved and it can then operate autonomously.

"Turbocompound" operating conditions occur when the sensors 36 and 42 simultaneously detect a high fuel supply and a fast speed of rotation of the turbosupercharger 2. In this fast-running condition of the engine, the exhaust gases drive the turbosupercharger 2 at very fast rates of rotation so that the compression of the gases at the intake of the engine is excessive and cannot fully be used. In this event, the turbosupercharger 2 no longer only constitutes a supercharger for the engine 1 but can also transfer to the shaft 4 of the engine 1 that portion of the energy from the exhaust gases which exceeds the requirements of the compressor. In these circumstances some of the excess power produced by the turbosupercharger 2 can be taken off and sent back to the alternators for storage in the batteries. This operating condition is illustrated in Figure 4.

If the engine is operating in a partially loaded condition which is characterised by a fast rate of rotation of the engine but a low fuel supply detected by the sensor 36, the system keeps the speed of the shaft 13 at values high enough to prevent the turbosupercharger 2 from being driven by the engine at rates of rotation which would involve unnecessary supercharging and a consequent waste of energy.

The compound engine according to the invention also increases the "engine-braking effect", which is particularly useful in internal combustion engines with small capacities, enabling such units to be supercharged even without the supply of fuel. This function is identified by the specific signal of the engine-braking sensor 46. In these circumstances, the turbosupercharger 2 is driven by the engine 1 which acts as a positive-displacement compressor, the passive work of which produces the engine-braking effect.

When the engine is started, the starter-motor sensor 37 and the fuel-supply sensor 36 indicate to the electronic control unit 33 the need to operate the brake 14 so as to lock the shaft 13 and enable the turbosupercharger 2 to be driven by the engine 1.

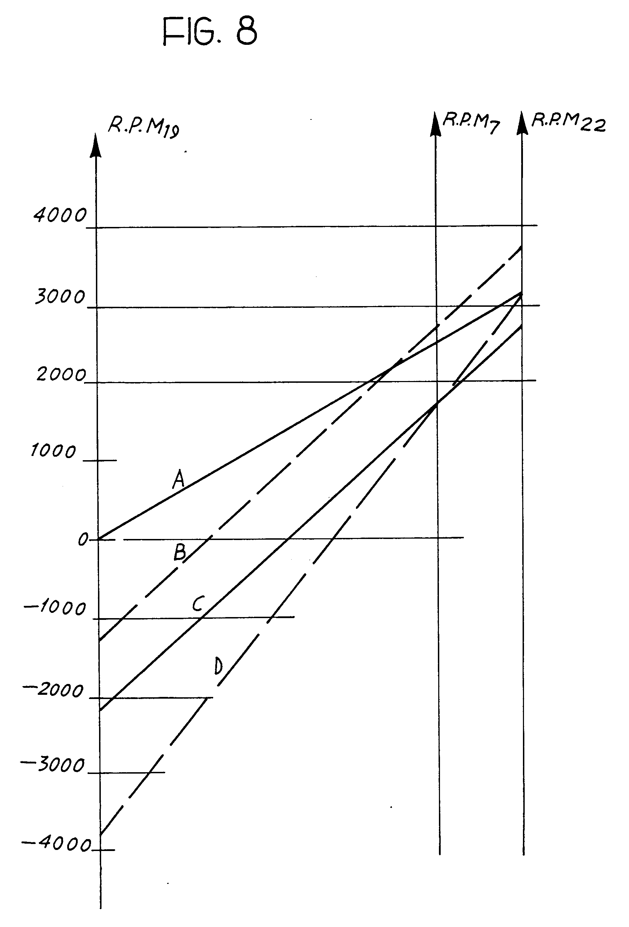

Figure 8 is a diagram relating the speed of rotation of the sun gear 19 (or of the shaft 13) to the speed of the ring gear 7 which is coupled for rotation with the engine 1 and to the speed of the ring gear 22 which is coupled for rotation with the turbosupercharger 2. The speeds are expressed as revolutions per minute (r.p.m.). The relationships linking these speeds of rotation can be expressed by straight-line equations; in fact, varying the relationship between these speeds is equivalent to varying the position of a straight line in a plane. The continuous straight lines A and C relate to operating conditions in which there is a 75% load on the engine 1 and the broken straight lines B and D correspond to the operation of the engine under a 100% load. The straight line A, for example, illustrates the operation of the variable-ratio transmission 3 when the sun gear 19 is stationary (due to the operation of the brake 14) which corresponds to a speed of rotation of the ring gear 7 of about 2,500 revolutions per minute and a speed of rotation of the ring gear 22 of slightly over 3,000 revolutions per minute. In the case of the straight line C, the sun gear 19 is contrarotating relative to the ring gear 22 at a negative velocity of about 2,200 revolutions per minute, whilst the ring 7 rotates in the opposite sense at about 700 revolutions per minute and the ring gear 22 at a speed of about 2,800 revolutions per minute.

The alternators 17 could be replaced by an electrical machine of a different type arranged to operate as a motor, which would enable one or both the brakes 14 and 18 to be omitted.

## Claims

1. A compound engine including a diesel engine and a turbosupercharger (2), the shaft (29) of which is coupled mechanically to the shaft (4) of the engine (1) by means of a variable-ratio transmission unit (3),
characterised in that:
the transmission unit (3) includes a first epicyclic reduction unit (8) including a first ring gear (7) coupled externally for rotation with the shaft (4) of the engine (1), a first sun gear (12) coaxial with the first ring gear (7), a first planet-carrier (10) carrying first planets (9) meshed with the internal teeth of the first ring gear (7) and with the first sun gear (12), and a second epicyclic reduction unit (20) arranged in series with the first (8) and including a second ring gear (22) coupled externally for rotation with the shaft (29) of the turbosupercharger (2), a second sun gear (19) coaxial with the second ring gear (22), a second planet-carrier (7, 21a) rotated by the first ring gear (7) and carrying second planets (21) meshed with the internal teeth of the second ring gear (22) and with the second sun gear (19), and in which the first and second sun gears (12, 19) are connected for rotation together,
means (14, 17, 18) for controlling the speed of rotation of the second sun gear (19),
sensor means (36, 37, 38, 41, 42, 46) for sensing operating conditions of the engine, and
an electronic control unit (33) which is supplied by the sensor means (36, 37, 38, 41, 42, 46) and is arranged to pilot the control means (14, 17, 18) in dependence on the operating conditions of the engine.

2. An engine according to Claim 1, characterised in that the control means (14, 17, 18) regulate the speed of rotation of the first sun gear (12) in a first sense of rotation between a maximum velocity corresponding to a minimum transmission ratio between the engine (1) and the turbosupercharger (2) and a speed of zero which corresponds to an intermediate transmission ratio between the engine (1) and the turbosupercharger (2), and in a second sense of rotation opposite the first, which corresponds to a maximum transmission ratio between the engine (1) and the turbosupercharger (2).

3. An engine according to Claim 1, characterised in that the first and second sun gears (12, 19) are carried by a common shaft (13) and the second planet-carrier (7, 21a) is carried by the first ring gear (7).

4. An engine according to Claim 3, characterised in that the control means include at least one continuously-adjustable electrical machine (17) operatively associated with the common shaft (13).

5. An engine according to Claim 4, characterised in that the electrical machine comprises an alternator (17).

6. An engine according to Claim 4 or Claim 5, characterised in that the control means also include an electropneumatic brake (14) of the "on-off" type, operatively associated with the common shaft (13).

7. An engine according to any one of Claims 4 to 6, characterised in that the control means also include an electropneumatic brake (18) of the "on-off" type, operatively associated with the first planet-carrier (10).

8. An engine according to any one of the preceding claims, characterised in that the sensor means include a fuel-supply sensor (36), a sensor (37) for detecting the operation of the starter motor, a sensor (38) for sensing the speed of rotation of the second sun gear (19), a pressure sensor (39) associated with a compressed-air accumulator (40), a sensor (41) for sensing the speed of rotation of the drive shaft (4) of the engine (1), a sensor (42) for sensing the speed of rotation of the turbosupercharger unit (2), and an engine-braking sensor (46).

9. An engine according to any one of the preceding claims, characterised in that it includes a third epicyclic reduction unit (25) between the second ring gear (22) and the shaft (29) of the turbosupercharger unit (2).

## Patentansprüche

1. Verbundmotor mit
- einem Dieselmotor und einem Turbolader (2), dessen Welle (29) mit der Kurbelwelle (4) des Motors (1) mittels einer Getriebeeinheit (3) mit variabler Übersetzung mechanisch verbunden ist,
dadurch gekennzeichnet,
daß die Getriebeeinheit (3) umfaßt
- eine erste epizyklische Untersetzungseinheit (8) mit einem ersten Hohlrad (7), das an seiner Außenseite drehbar mit der Kurbelwelle (4) des Motors (1) verbunden ist, einem ersten Sonnenrad (12), das koaxial zu dem ersten Hohlrad (7) angeordnet ist, einem ersten Planetenträger (10), der erste Planetenräder (9) trägt, die mit den Innenzähnen des ersten Hohlrads (7) und mit dem ersten Sonnenrad (12) in Eingriff sind, und
- eine in Reihe mit der ersten epizyklischen Untersetzungseinheit (8) angeordnete zweite epizyklische Untersetzungseinheit (20) mit einem zweiten Hohlrad (22), das an seiner Außenseite drehbar mit der Welle (29) des Turboladers (2) verbunden ist, einem zweiten Sonnenrad (19), das koaxial zu dem zweiten Hohlrad (22) angeordnet ist, einem zweiten Planetenträger (7, 21a), der von dem ersten Hohlrad (7) gedreht wird und zweite Planetenräder (21) trägt, die mit den Innenzähnen des zweiten Hohlrads (22) und mit dem zweiten Sonnenrad (19) in Eingriff sind, wobei die beiden Sonnenräder (12, 19) so miteinander verbunden sind, daß sie sich gemeinsam drehen,
mit
- Mitteln (14, 17, 18) zur Regelung der Drehzahl des zweiten Sonnenrades (19),
- Sensor-Mitteln (36, 37, 38, 41, 42, 46) zur Erfassung der Betriebsbedingungen des Motors, sowie
- einer elektronischen Steuerung (33), die mit den Sensor-Mitteln (36, 37, 38, 41, 42, 46) verbunden und so ausgebildet ist, daß sie die Regelmittel (14, 17, 18) in Abhängigkeit von den Betriebsbedingungen des Motors steuert.

2. Motor nach Anspruch 1, dadurch gekennzeichnet, daß die Regelmittel (14, 17, 18) die Drehzahl des ersten Sonnenrads (12) in einem ersten Drehsinn zwischen einer einem minimalen Übersetzungsverhältnis zwischen Motor (1) und Turbolader (2) entsprechenden Maximaldrehzahl und einem einem mittleren Übersetzungsverhältnis zwischen Motor (1) und Turbolader (2) entsprechenden Stillstand (0 min⁻¹), sowie in einem zweiten, dem ersten entgegengesetzten, Drehsinn der einem maximalen Übersetzungsverhältnis zwischen Motor (1) und Turbolader (2) entspricht, regeln.

3. Motor nach Anspruch 1, dadurch gekennzeichnet, daß die beiden Sonnenräder (12, 19) auf einer gemeinsamen Welle (13) sitzen und daß der zweite Planetenträger (7, 21a) vom ersten Hohlrad (7) getragen wird.

4. Motor nach Anspruch 3, dadurch gekennzeichnet, daß die Regelmittel mindestens eine stufenlos einstellbare elektrische Kraftmaschine (17) umfassen, die mit der gemeinsamen Welle (13) treibend verbunden ist.

5. Motor nach Anspruch 4, dadurch gekennzeichnet, daß als elektrische Kraftmaschine ein Wechselstromgenerator (17) verwendet wird.

6. Motor nach Anspruch 4 oder 5, dadurch gekennzeichnet, daß die Regelmittel weiterhin eine elektropneumatische Bremse (14) umfassen, die als "Sperrbremse" arbeitet und mit der gemeinsamen Welle (13) wirkend verbunden ist.

7. Motor nach einem der Ansprüche 4 bis 6, dadurch gekennzeichnet, daß die Regelmittel weiterhin eine elektropneumatische Bremse (18) umfassen, die als "Sperrbremse" arbeitet und mit dem ersten Planetenträger (10) wirkend verbunden ist.

8. Motor nach einem der vorhergehenden Ansprüche, dadurch gekennzeichnet, daß die Sensor-Mittel einen Kraftstoffzufuhr-Sensor (36), einen Sensor (37) zur Erfassung des Betriebs des Anlassers, einen Sensor (38) zur Erfassung der Drehzahl des zweiten Sonnenrads (19), einen mit einem Druckluftspeicher (40) verbundener Drucksensor (39), einen Sensor (41) zur Erfassung der Drehzahl der Kurbelwelle (4) des Verbrennungsmotors (1), einen Sensor (42) zur Erfassung der Drehzahl der Turbolader-Einheit (2) sowie einen Motorbrems-Sensor (46) umfassen.

9. Motor nach einem der vorhergehenden Ansprüche, dadurch gekennzeichnet, daß er eine dritte epizyklische Untersetzungseinheit (25) umfaßt, die zwischen dem zweiten Hohlrad (22) und der Welle (29) der Turbolader-Einheit (2) angeordnet ist.

## Revendications

1. Moteur compound comprenant un moteur diesel et un turbosurcompresseur (2), dont l'arbre (29) est couplé mécaniquement à l'arbre (4) du moteur (1) au moyen d'une unité de transmission (3) à rapport variable,
caractérisé en ce que
l'unité de transmission (3) comprend une première unité (8) planétaire de réduction comportant une première couronne dentée (7) couplée extérieurement de manière à tourner avec l'arbre (4) du moteur (1), un premier engrenage principal (12) coaxial à la première couronne dentée (7), un premier porte-satellites (10) portant des premiers satellites (9) en prise avec les dents internes de la première couronne dentée (7) et avec le premier engrenage principal (12) et une deuxième unité (20) planétaire de réduction agencée en série avec la première (8) et comprenant une deuxième couronne dentée (22) couplée extérieurement de manière à tourner avec l'arbre (29) du turbosurcompresseur (2), un deuxième engrenage principal (19) coaxial à la deuxième couronne denté (22), un deuxième porte-satellites (7, 21a) mis en rotation par la première couronne dentée (7) et portant des deuxièmes satellites (21) en prise avec les dents internes de la deuxième couronne dentée (22) et avec le deuxième engrenage principal (19), et dans laquelle les premier et deuxième engrenages principaux (12, 19) sont reliés de manière à tourner ensemble,
des moyens (14, 17, 18) pour commander la vitesse de rotation du deuxième engrenage principal (19),
des moyens de détection (36, 37, 38, 41, 42, 46) pour détecter les conditions de fonctionnement du moteur, et
une unité (33) électronique de commande qui est alimentée par les moyens de détection (36, 37, 38, 41, 42, 46) et est conçue pour agir sur les moyens de commande (14, 17, 18) en fonction des conditions de fonctionnement du moteur.

2. Moteur selon la revendication 1, caractérisé en ce que les moyens de commande (14, 17, 18) règlent la vitesse de rotation du premier engrenage principal (12) dans un premier sens de rotation, entre une vitesse maximum correspondant à un rapport de transmission minimum entre le moteur (1) et le turbosurcompresseur (2) et une vitesse égale à zéro qui correspond à un rapport de transmission intermédiaire entre le moteur (1) et le turbosurcompresseur (2), et dans un deuxième sens de rotation opposé au premier, qui correspond à un rapport de transmission maximum entre le moteur (1) et le turbosurcompresseur (2).

3. Moteur selon la revendication 1, caractérisé en ce que les premier et deuxième engrenages principaux (12, 19) sont portés par un même arbre (13) et le deuxième porte-satellites (7, 21a) est porté par la première couronne dentée (7).

4. Moteur selon la revendication 3, caractérisé en ce que les moyens de commande comprennent au moins une machine électrique (17) sans gradations, associée en fonctionnement à l'arbre commun (13).

5. Moteur selon la revendication 4, caractérisé en ce que la machine électrique comprend un alternateur (17).

6. Moteur selon les revendications 4 ou 5, caractérisé en ce que les moyens de commande comprennent également un frein (14) électropneumatique du type "on-off", associé en fonctionnement à l'arbre commun (13).

7. Moteur selon l'une quelconque des revendications 4 à 6, caractérisé en ce que les moyens de commande comprennent également un frein (18) électropneumatique du type "on-off", associé en fonctionnement au premier porte-satellites (10).

8. Moteur selon l'une quelconque des revendications précédentes, caractérisé en ce que les moyens de détection comprennent une sonde (36) de l'alimentation de carburant, un détecteur (37) destiné à détecter le fonctionnement du démarreur, un capteur (38) destiné à capter la vitesse de rotation du deuxième engrenage principal (19), un capteur de pression (39) associé à un accumulateur (40) à air comprimé, un capteur (41) destiné à capter la vitesse de rotation de l'arbre de transmission (4) du moteur (1), un capteur (42) destiné à capter la vitesse de rotation de l'unité turbosurcompresseur (2), et un détecteur (46) de freinage moteur .

9. Moteur selon l'une quelconque des revendications précédentes, caractérisé en ce qu'il comprend une troisième unité (25) planétaire de réduction entre la deuxième couronne dentée (22) et l'arbre (29) de l'unité turbosurcompresseur (2).
